# Europäisches Patentamt
# European Patent Office
# Office européen des brevets

(11) Publication number: **0 119 996**
**B1**

## (12) EUROPEAN PATENT SPECIFICATION

(45) Date of publication of patent specification: **07.02.90**

(51) Int. Cl.⁵: **B 23 P 6/04, B 23 K 20/08**

(21) Application number: **82903208.5**

(22) Date of filing: **24.09.82**

(86) International application number:
**PCT/US82/01312**

(87) International publication number:
**WO 84/01119 29.03.84 Gazette 84/09**

(54) **METHOD OF REPAIRING LEAKS IN STEAM GENERATOR TUBES.**

(43) Date of publication of application:
**03.10.84 Bulletin 84/40**

(45) Publication of the grant of the patent:
**07.02.90 Bulletin 90/06**

(84) Designated Contracting States:
**CH DE FR GB LI SE**

(56) References cited:
EP-A-0 043 672
DE-A-1 527 554
GB-A-1 588 971
US-A-3 140 537
US-A-3 402 870
US-A-3 781 966
US-A-3 912 148
US-A-4 028 789
US-E- 30 802

(73) Proprietor: THE BABCOCK & WILCOX
COMPANY
1010 Common Street P.O. Box 60035
New Orleans Louisiana 70160 (US)

(72) Inventor: FELDSTEIN, Joel, Gary
2722 Saxon Street, NE
North Canton, OH 44721 (US)
Inventor: GUTZWILLER, James, Edwards, Jr.
403 Ramblewood Road
Forest, VA 24551 (US)

(74) Representative: Cotter, Ivan John et al
D. YOUNG & CO. 10 Staple Inn
London WC1V 7RD (GB)

Courier Press, Leamington Spa, England.

EP 0 119 996 B1

## Description

This invention relates to repairing defective steam generator tubes.

In the operation of steam generators wherein heat transfer occurs between fluid passed through the tubes and fluid in contact with the outside of the tubes it sometimes becomes necessary to seal one or more leaks which occur in the tubes, in order to prevent mixing of the fluids. The sealing of the tubes in the past has generally been accomplished by means of expandable sleeves, expansion of the tube into the tubesheet, or by means of welded sealable sleeves or plugs, depending on the pressure differential involved.

Ordinarily, where a high pressure steam generator or heat exchanger tube is to be sealed, a cylindrical sleeve is inserted into the bore of the tube, and a weld bead is deposited around the outside circumference of the joint between a nondefective region of the tube and the sleeve to form a pressure-tight seal. In many cases such tube sealing technique will be satisfactory. However, sometimes it has been found inadequate because fluid can penetrate along the tube-seal interface and corrode through the weld bead thereby causing leakage. Moreover, in some heat exchangers, it is relatively difficult to seal weld sleeves using conventional equipment because of space limitations.

In the case of a low-pressure heat exchanger tube, the cylindrical sleeve is inserted into the bore of the tube and is either mechanically, hydraulically, or explosively expanded in order to create a mechanical seal between the sleeve and the tube. In most cases these seals tend to leak once the expanded areas have been exposed to several thermal cycles.

Repair of leaking defects in the tubesheet region of tubular heat exchangers has in the past been performed by mechanical, hydraulic or explosive expansion of the tube into the tubesheet at a location above (or below as the case may be) the defective area in order to isolate the leak from the fluid flow outside the tube. This approach is not always effective in stopping leakage as the tube and tubesheet are in mechanical contact; further operation of the steam generator exposes the joint to thermal cycles which loosen the seal. The success of this method depends upon possible corrosion of the tubesheet and/or the absence of debris in the tubesheet-tube crevice: either condition would destroy the leak tightness sought.

Known methods of sealing a defective tube, whether by expansion of tubes to tubesheets, or brazing or welding sleeves to the tube, have taken place along the tube at an area away from the defect. Expansion of tubes to tubesheets and sleeves isolates the defective areas of the tube from the fluid flow either without or within the tube. And in the case of sleeving, the sleeve must be able to withstand the loading forces which acted upon the original tube since the sleeve actually becomes the fluid conduit in the cases where corrosion is in its advanced stages. Sleeves of this type severely limit the fluid flow area within the repaired tube thereby reducing the efficiency of the steam generator.

US—A—3 912 148 discloses a method of repairing a defective steam generator tube that is located in a tubesheet, the method comprising cleaning the interior surface of the defective area of the tube, positioning a cylindrical sleeve within the tube and over the defective area, and detonating an explosive within the sleeve so as to explosively weld the sleeve to the tube. The sleeve has a relatively short weld portion and a relatively long braze portion. The weld portion is of reduced diameter and has a flange encircling it. The sleeve is positioned such that the weld portion is disposed within a part of the tube within the tubesheet and the braze portion is disposed within a part of the tube outside of the tubesheet. Respective different explosive charges are positioned within the weld and braze portions of the sleeve. Upon detonation of the explosive charges, the braze portion is expanded into contact with the tube but is not thereby welded to the tube: bonding to the tube has to be effected bu subsequent brazing. Detonation of the explosive charges causes only the weld portion to be welded to the tube.

The present invention produces a method of repairing a defective steam generator tube that is located in a tube sheet, the method comprising cleaning the interior surface of the defective area of the tube, positioning a cylindrical sleeve within the tube and over the defective area, and detonating an explosive within the sleeve so as to explosively weld the sleeve to the tube, the method being characterised by:

inserting an explosive welding device, which contains the explosive, and on which the sleeve is mounted, into the tube, using remotely operated tooling on which the explosive welding device is positioned;

positioning the explosive welding device, with the sleeve mounted thereon, over the defective area of the tube, which area is encompassed by the tubesheet, using the remotely operated tooling;

releasing the explosive device, with the sleeve mounted thereon, from the remotely operated tooling; and

detonating the explosive to explosively weld the entire surface area of the sleeve to the tube.

A preferred embodiment of the invention described hereinbelow avoids the disadvantages of the prior art by employing a method of sealing or patching cracks in steam generator tubes within the tubesheet areas. This method employs the use of an explosive welding device in order to create a metallurgical bond atop the degraded area of the tube. The sleeve is welded to the inside wall of the tube along the entire length of the sleeve. The thickness of the sleeve is such that it does not restrict the fluid flow area within the tube, as do normal sleeving techniques.

The invention will now be further described, by way of illustrative and non-limiting example, with reference to the accompanying drawings, in which:

Fig. 1 is a side elevational view of a defective steam generator tube repaired by expansion;

Fig. 2 is a side elevational view of a defective steam generator tube repaired by normal sleeving techniques; and

Fig. 3 is a side elevational view of a defective steam generator tube and placement of a sleeve using an explosive welding device during repair of the tube by a preferred method embodying the invention.

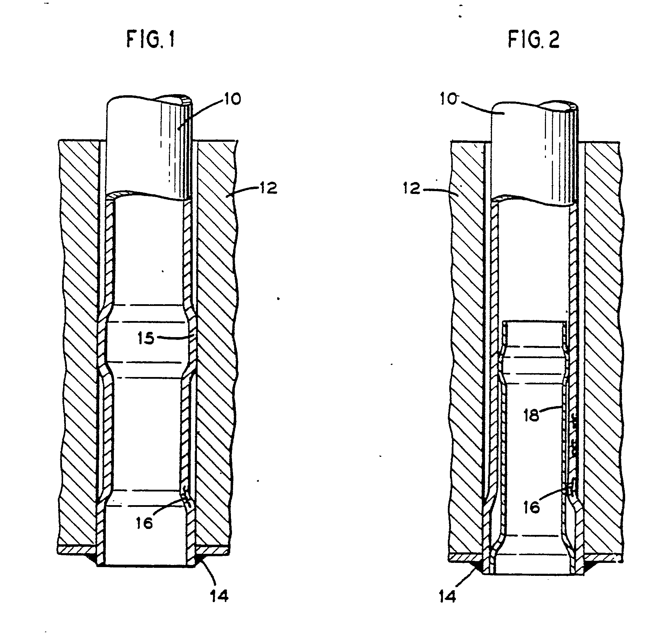

Figs. 1 to 3 illustrate the type and general location of a typical crack or leak to be sealed by a method embodying the present invention. A defective tube 10 is shown within a tubesheet 12. As per standard procedure, the tube 10 has been expanded into contact with the tubesheet 12 and the end 14 welded thereto. Experience has shown that stress corrosion cracks 16 occur in an area of the tube 10 where roll expansion has occurred; that area where the tube diameter increases or decreases and comes into contact with the tubesheet 12. Prior art methods of isolating these cracks are shown in Figs. 1 and 2.

Fig. 1 illustrates the technique which consists of expanding the tube 10 into the tubesheet 12 between the cracked area and the fluid outside the tube. This method provides metal to metal contact with the objective of stopping the leakage flow by isolating the fluid within the tube from the fluid without the tube. The tube 10 can be either hydraulically, mechanically or explosively expanded (not mutually exclusive) into contact with the tubesheet 12. Fig. 2 illustrates the second technique of isolating the crack from the fluid flow within the tube 10 by sleeving. A sleeve 18 of length greater than the degraded area and of a diameter less than the diameter of the defective tube 10 is positioned within the tube. The two ends of the sleeve 18 are then either expanded, brazed or welded to the non defective regions of tube.

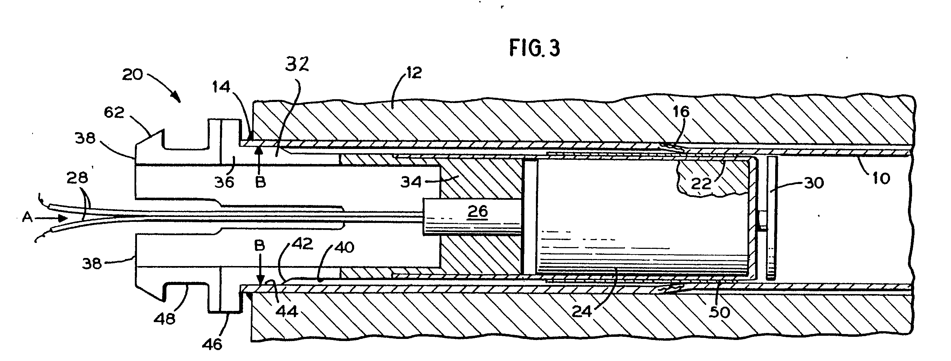

The preferred method of repairing the leaks in steam generator tubes is illustrated in Fig. 3. As shown, an explosive welding device 20 is inserted into the defective tube 10. Welding device 20 is comprised of a front cup member 22 which is constructed of a plastic material of sufficient brittleness to shatter into small fragments when the device 20 is exploded. Within cup member 22 is an explosive material 24. In contact with one end of the explosive material 24 is an electric detonator 26 having wires 28 extending therefrom. The wires 28 are connected to a firing box (not shown) which is located in an area remote from the steam generator tube to be repaired. The explosive material 24 of the device is sealed with adhesive into the plastic cup member 22 thereby making the device resistant to moisture and water proof for possible underwater use. A centering device 30 is attached to the front of cup member 22 to ensure that the welding device 20 is axially aligned within the tube 10 to ensure minimum stand off or explosive welding and to hold a cylindrical sleeve 50 in place.

The back end of the explosive device 20 is composed of a plug 32. The plug 32 consists of front and rear portions 34 and 36 respectively. The leading edge of the plug 32 is of slightly smaller diameter than the remainder of the front portion 34 in order that the lip of the cup member 22 can be tightly fitted over the plug 32. Within the central portion of the front end 34 of plug 32 is a detonator bore. The detonator bore is of such a size to allow the detonator 26 to snugly fit therein. When the cup member 22 and plug 32 are joined, the detonator 26 is in contact with the explosive material 24.

The rear portion 36 of the plug is comprised of four collapsable members 38. The collapsable members 38 are of a ductile, strong plastic material shaped in such a manner that they will collapse to a diameter smaller than the inner diameter of the tube 10 to be repaired. The collapsable members 38 apply a spring force againt the inner diameter of the tube 10 so that it will remain securely positioned when inserted into a tube of a vertical tubed steam generator. The collapsable members 38 have an initial flat portion 40 which turns into a gradual taper 42 to a second flat area 44. A flange portion 46, which acts as an insertion stop for the device 20, exists after the second flat section 44 and terminates in a recess 48 which has been designed for use for remote tool handing. During insertion of the device 20 on the tooling, the device is pushed in the direction of an arrow A into the tool holder (not shown). The tool holder is cylindrical with a lip which mates with the recess 48. Interference of a tapered leading edge 62 of the device 20, as it comes in contact with the lip on the tool holder, causes the collapsable members 38 to move toward the center of the device. When the lip of the tool holder moves into alignment with the recess 48, the collapsable members 38 return to the original position and the device is securely positioned on the tool holder, which is either manual or automatic tooling. The tool is then positioned to insert the device 20 into the tube 10 to be repaired. During insertion into the tube, the gradual taper 42 comes into interference with the tube 10. Continued insertion collapses the members 38 which automatically releases the device from the tool holder. When the device is in the tube and released from the tool holder, the collapsable members 38 exert a spring force, at the second flat portion 44 against the inside of the tube 10 as shown in Fig. 3 by arrows B. It is this force which is capable of supporting and retaining the explosive device 20 at the designated position, either in a horizontal or vertical tube, until the damaged tube is repaired.

The front cup member 22 is constructed of a plastic material of sufficient brittleness to shatter into small fragments when the device is exploded. Acrylic plastics, such as melamine formaldehyde, urea formaldehyde or methyl

methacrylate, are satisfactory. Strong ductile plastic cups are not satisfactory as they do not shatter and would therefore become wedged in the tube. The explosive material 24, for example nitrostarch, nitroguanidine, amatol or pentolite, is packed into the cup with a force adequate to produce a desired density of 0.35—0.7 g/cm³. A small amount of RDX (cyclotrimethylemetrinitramins), PETN (pentadrythrictol tetranitrate) or TATOC (tetranitrodibenzo-1, tetra-azpentalena) is packed on top of the explosive material 24 to serve as a booster. A thin coat of adhesive is applied to the lip of the cup member 22 and to the outside of the leading edge of plug 32. The plug 32, with the detonator 26 already fixed thereto, is inserted into the cup member 22. The plug member 32 is contructed of an acetal resin, such as Delrin (a trademark of the Dupont DeNemours El & Co.), nylon or polyethalene.

The front section of the plug can be of varied length in order to adjust the final position of the explosive cartridge and weld area within the tube. It will be understood by those skilled in the art that the back end of the plug can be composed of, for example, one rigid member and one collapsable member as detailed above. The collapsable member would unilaterally supply the spring force to support the device in a desired position. The use of the four identical members along with the centering device (locating member) 30 ensures that the device 20 will be properly positioned within the defective tube even though all operations are carried out with remote tooling.

In the preferred method of the present invention the welding device 20 is remotely inserted into the end of defective tube 10. Premounted to the cup member 22 is a cylindrical sleeve 50 to be welded over the crack 16. As shown in Fig. 3, the axial length of the sleeve 50 is sized to approximate the length of the cup member 22. A recess can be machined in the cup 22 so that the sleeve 50 can be mounted therein. The recess is sized such that the sleeve 50 would be flush with the diameter of the cup 22. The sleeve 50 is thin walled, about 0.010 to 0.040 inches (0.0254 to 0.1016 cm), and generally about 1.5 to 4.0 inches (3.81 to 10.16 cm) long. The leading edge of the sleeve can be tapered in order to provide a smoother fluid flow transition section. Once inserted and positioned the remote tooling is removed and the device is detonated in order to effect the welding of the sleeve 50 to the inner wall of defective tube 10. This procedure can thereafter be repeated for each defective tube. It is also envisaged that several devices can be inserted at one time and simultaneously detonated.

Due to a build-up of oxides and other material within the defective tube, the inside of the tube is cleaned before welding the sleeve thereto. Cleaning of the tube can be accomplished remotely by methods well known in the art.

## Claims

1. A method of repairing a defective steam generator tube (10) that is located in a tubesheet (12), the method comprising cleaning the interior surface of the defective area of the tube (10), positioning a cylindrical sleeve (50) within the tube (10) and over the defective area, and detonating an explosive (24) within the sleeve (50) so as to explosively weld the sleeve to the tube (10), the method being characterised by:
inserting an explosive welding device (20), which contains the explosive (24), and on which the sleeve (50) is mounted, into the tube (10), using remotely operated tooling on which the explosive welding device (20) is positioned;
positioning the explosive welding device (20), with the sleeve (50) mounted thereon, over the defective area of the tube (10), which area is encompassed by the tubesheet (12), using the remotely operated tooling;
releasing the explosive device, with the sleeve (50) mounted thereon, from the remotely operated tooling; and
detonating the exposive (24) to explosively weld the entire surface area of the sleeve (50) to the tube (10).

2. A method according to claim 1, wherein the sleeve (50) is positioned over a defective area of the tube (10) which is located in a region where roll expansion of the tube (10) has taken place and stress corrosion cracking of the tube has occurred.

3. A method according to claim 1 or claim 2, wherein, when positioned over the defective area of the tube (10), the sleeve is wholly within the part of the tube within the tubesheet (12).

4. A method according to claim 1, claim 2 or claim 3, wherein the sleeve (50) is of substantially uniform cross-section along its whole length.

5. A method according to any one of the preceding claims, wherein the sleeve (50) has a wall thicknes of about 0.254 to 1.016 mm (0.01 to 0.04 inches) and a length of about 38.1 to 101.6 mm (1.5 to 4.0 inches).

## Patentansprüche

1. Verfahren zum Reparieren eines schadhaften Dampferzeugerrohres (10), welches in einer Rohrhülle (12) angeordnet ist, wobei das Verfahren die folgenden Schritte aufweist:
Reinigen der Innenfläche (10) des Rohres in dem schadhaften Bereich, Anordnen einer zylindrischen Hülse (50) innerhalb des Rohres (10) und auf dem schadhaften Bereich, und Detonierenlassen eines Sprengstoffes (24) innerhalb der Hülse (50), um die Hülse durch Explosion an das Rohr (10) zu schweißen, wobei das Verfahren gekennzeichnet ist durch: Einsetzen einer Explosionsschweißvorrichtung (20), welche den Sprengstoff (24) enthält und an welcher die Hüle (50) befestigt ist, in das Rohr (10) unter Verwendung eines fernbetätigten Werkzeuges, an welchem die Explosionsschweißvorrichtung (20) angeordnet ist;

Positionieren der Explosionsschweißvorrichtung (20) mit der dàran befestigten Hülse (50) auf dem schadhaften Bereich des Rohres (10), welcher von der Rohrhülle (12) unschlossen wird, und zwar unter Verwendung des fernbetätigten Werkzeuges;

Lösen der Explosionsvorrichtung mit der daran befestigten Hülse (50) von dem fernbetätigten Werkzeug; und

Explodierenlassen des Sprengstoffes (24), um den gesamten Oberflächenbereich der Hülse (50) an das Rohr (10) anzuschweißen.

2. Verfahren nach Anspruch 1, wobei die Hülse (50) über einem schadhaften Bereich des Rohres (10) angeordnet wird, welcher in einem Bereich liegt, wo eine Walzdehnung des Rohres (10) stattgefunden hat und Spannungskorrosionsrisse des Rohres aufgetreten sind.

3. Verfahren nach Anspruch 1 oder 2, wobei die Hülse, wenn sie auf dem schadhaften Bereich des Rohres (10) angeordnet ist, ganz innerhalb des Teiles des Rohres liegt, welcher sich innerhalb der Rohrhülle (12) befindet.

4. Verfahren nach Anspruch 1, 2 oder 3, wobei die Hülse (50) von im wesentlichen gleichförmigem Querschnitt über ihre gesamte Länge ist.

5. Verfahren nach einem der vorstehenden Ansprüche, wobei die Hülse (50) eine Wandstärke von etwa 0,254 bis 1,016 mm (0,01 bis 0,04 Zoll) und eine Länge von etwa 38,1 bis 101,6 mm (0,5 bis 4,0 Zoll) hat.

## Revendications

1. Procédé de réparation d'un tuyau de vaporisation dé fectueux (10) qui est situé dans une gaine de tuyau (12), le procédé consistant à nettoyer la surface interne de la zone défectueuse du tuyau (10), à positionner un manchon cylindrique (50) à l'intérieur du tuyau (10) et sur la zone défectueuse, et à faire détoner un explosif (24) à l'intérieur du manchon (50) afin de souder par explosion le manchon au tuyau (10), le procédé étant caractérisé par:

l'insertion d'un dispositif de soudage à explosif (20), qui renferme l'explosif (24), et sur lequel le manchon (50) est monté, dans le tuyau (10), en utilisant un outillage télécommandé sur lequel le dispositif de soudage à explosif (20) est placée;

le positionnement du dispositif de soudage à explosif (20) avec le manchon (50) monté dessus, sur la zone défectueuse du tuyau (10), laquelle zone est enveloppée par la gaine de tuyau (12), en utilisant l'outillage télécommandé;

la libération du dispositif à explosif, avec le manchon (50 monté dessus, à partir de l'outillage télécommadé; et

la détonation de l'explosif (24) pour souder par explosion toute la zone de surface du manchon (50) au tuyau (10). .

2. Procédé selon la revendication 1, dans lequel le manchon (50) est positionné sur une zone défectueuse du tuyau (10) qui est située dans une région où la dilatation circulaire du tuyau (10) a eu lieu et où des fissures de corrosion sous contraintes du tuyau se sont produites.

3. Procédé selon la revendication 1 ou 2, dans lequel, lorsqu'il est positionné sur la zone défectueuse du tuyau (10), le manchon est entièrement à l'intérieur de la partie du tuyau dedans la gaine de tuyau (12).

4. Procédé selon la revendication 1, 2 ou 3, dans lequel le manchon (50) est de section transversale substantiellement uniforme sur toute sa longueur.

5. Procédé selon l'une quelconque des revendications précédentes, dans lequel le manchon (50) présente une épaisseur de paroi d'environ 0,254 à 1,016 mm (0,01 à 0,04 pouces) et une longueur d'environ 38,1 à 101,6 mm (1,5 à 4,0 pouces).

FIG. 1

FIG. 2

FIG.3